# EUROPÄISCHE PATENTSCHRIFT

(11) **EP 1 057 090 B1**
(45) Veröffentlichungstag und Bekanntmachung des Hinweises auf die Patenterteilung: **19.01.2005**
(21) Anmeldenummer: 99914429.8
(22) Anmeldetag: 24.02.1999
(51) Int. Cl.: G05F 1/46, H02M 3/10

(54) **ELEKTRISCHES GERÄT**
ELECTRICAL APPLIANCE
APPAREIL ELECTRIQUE

(30) Priorität: 28.02.1998 DE 19808606
(43) Veröffentlichungstag der Anmeldung: 06.12.2000
(73) Patentinhaber: ROBERT BOSCH GMBH, 70442 Stuttgart (DE)
(72) Erfinder: FREITAG, Thomas, D-31191 Algermissen (DE); ZIMMERMANN, Holger, D-31141 Hildesheim (DE); BAAS, Dieter, D-77694 Auenheim (DE)
(86) Internationale Anmeldenummer: PCT/DE1999/000493
(87) Internationale Veröffentlichungsnummer: WO 1999/044110

(56) Entgegenhaltungen:
- DE-A- 19 642 343
- US-A- 4 598 255
- PATENT ABSTRACTS OF JAPAN vol. 097, no. 002, 28. Februar 1997 (1997-02-28) & JP 08 273291 A (MATSUSHITA ELECTRIC IND CO LTD), 18. Oktober 1996 (1996-10-18) & US 5 834 913 A (AKAGI NORITAKA ET AL) 10. November 1998 (1998-11-10)

## Beschreibung

### Stand der Technik

Die Erfindung geht von einem elektrischen Gerät nach der Gattung des Hauptanspruchs aus.

Es sind bereits Abspielgeräte für optische Speicherplatten in Form von Compact-Disc-Spielern bekannt. Aus der noch nicht vorveröffentlichten deutschen Patentanmeldung 196 42 343 ist bereits ein Compact-Disc-Laufwerk bekannt, das einen Motor zur Rotation einer zwischen zwei Platten eingespannten Compact-Disc aufweist. Weiterhin ist ein Lesekopf auf einen Transportmechanismus montiert, der den Lesekopf radial über die Compact-Disc bewegt.

Aus dem Patent Abstract of Japan, Volume 097, No. 002 vom 28. Februar 1997 ist ein Verfahren und ein Gerät zur Steuerung der Rotation eines Antriebsmotors für eine Speicherplatte eines Abspielgeräts bekannt. Dabei wird die dem Antriebsmotor zugeführte Versorgungsspannung in Abhängigkeit der gerade erforderlichen Rotationsgeschwindigkeit der Speicherplatte ausgewählt.

Aus der US 4598255 ist eine einstellbare Versorgungsspannung für einen Verstärker bekannt.

Die EP-A 221 859 beschreibt eine Lösung, nach der mehrere Verbraucher über ein Versorgungsspannungskabel mit Versorgungsspannung versorgt werden. Die Dimensionierung des Kabels wird dabei an die Konfiguration der Verbraucher, insbesondere bei abwechselnder Aktivierung der Verbraucher, angepasst.

Hinweise auf einen geeigneten Betrieb verschiedener Mittel unterschiedlichen Versorgungsspannungsbedarfs, denen die gleiche Versorgungsspannung zugeführt ist, werden nicht aufgezeigt. Dies wird jedoch mit den Merkmalen des Patentanspruchs 1 erreicht.

### Vorteile der Erfindung

Das erfindungsgemäße elektrische Gerät mit den Merkmalen des Hauptanspruchs hat demgegenüber den Vorteil, daß die Versorgungsspannung jeweils an den gerade höchsten Spannungsbedarf angepaßt werden kann, so daß Leistungsverluste vermieden werden. Weiterhin ergibt sich durch Verwendung der gleichen Versorgungsspannung für die Mittel eine Einsparung von zusätzlichen Spannungsversorgungseinheiten und damit von Material, Platzbedarf und Kosten.

Durch Minimierung der Verlustleistung entsteht außerdem der Vorteil, daß weniger Platzbedarf für Kühlflächen zur Ableitung der Verlustleistung erforderlich ist.

Durch die in den Unteransprüchen aufgeführten Maßnahmen sind vorteilhafte Weiterbildungen und Verbesserungen des im Hauptanspruch angegebenen elektrischen Gerätes möglich.

Vorteilhaft ist es, daß ein Abspielmodus vorgesehen ist, in dem die Versorgungsspannung einen ersten vorgegebenen Wert nicht unterschreitet. Auf diese Weise wird beim Abspielen einer optischen Speicherplatte nur die hierfür erforderliche Energie verbraucht und keine unnötige Verlustleistung produziert.

Ein weiterer Vorteil besteht darin, daß ein Vibrationsmodus vorgesehen ist, in dem die Versorgungsspannung einen zweiten vorgegebenen Wert nicht unterschreitet. Auf diese Weise wird im Abspielbetrieb unter Vibration eine höhere Regelkreisverstärkung ermöglicht, so daß durch Vibrationen bedingte Störungen bei der Abtastung einer optischen Speicherplatte durch die Abtasteinheit besser ausgeglichen werden.

Vorteilhaft ist weiterhin, daß die Versorgungsspannung durch ein Schaltnetzteil eingestellt ist. Auf diese Weise treten bei gegenüber der vollen zur Verfügung stehenden Versorgungsspannung abgesenkter Spannung keine zusätzlichen Verluste auf.

Vorteilhaft ist auch, daß eine Auswerteschaltung vorgesehen ist, die den höchsten gerade benötigten Spannungsbedarf der Mittel ermittelt und in Abhängigkeit dieses Spannungsbedarfs ein Steuersignal zur Einstellung der dafür erforderlichen Versorgungsspannung abgibt. Auf diese Weise ist eine automatische Anpassung der Versorgungsspannung an den gerade höchsten Spannungsbedarf der Mittel möglich, so daß das elektrische Gerät zu jedem Zeitpunkt automatisch mit geringstmöglicher Verlustleistung betrieben wird.

Ein weiterer Vorteil besteht darin, daß ein Mittel zum Einzug und/oder Ausschub einer optischen Speicherplatte vorgesehen ist, dem die Versorgungsspannung zugeführt ist, und daß die Versorgungsspannung in Abhängigkeit des Spannungsbedarfs dieses Mittels eingestellt ist. Auf diese Weise wird die Funktionalität der Spannungsversorgung weiter erhöht und Platz und Material für eine zusätzliche Spannungsversorgung für den Einzug bzw. Ausschub einer optischen Speicherplatte eingespart.

Ein weiterer Vorteil besteht darin, daß die Versorgungsspannung in Abhängigkeit des Spannungsbedarfs für den Einzug bzw. Ausschub der optischen Speicherplatte eingestellt ist, so daß eine dafür erforderliche höhere Versorgungsspannung auch nur für den Einzug bzw. Ausschub zur Verfügung gestellt werden muß, so daß Verlustleistung eingespart wird.

Ein weiterer Vorteil besteht darin, daß ein Einzugs-/Auszugsmodus für den Einzug bzw. den Ausschub einer optischen Speicherplatte vorgesehen ist, in dem die Versorgungsspannung einen dritten vorgegebenen Wert nicht unterschreitet. Auf diese Weise wird sichergestellt, daß die für den Einzug bzw. Ausschub der optischen Speicherplatte erforderliche Energie im Bedarfsfall zur Verfügung gestellt wird.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild eines erfindungsgemäßen elektrischen Gerätes, Figur 2 eine Schaltungsanordnung zur Ansteuerung eines Schaltnetzteiles, Figur 3 eine Schaltungsanordnung zur Ansteuerung einer einen Längsregler umfassenden Spannungsversorgungseinheit und Figur 4 einen Ablaufplan für die Funktionsweise einer im elektrischen Gerät angeordneten Auswerteschaltung.

### Beschreibung des Ausführungsbeispiels

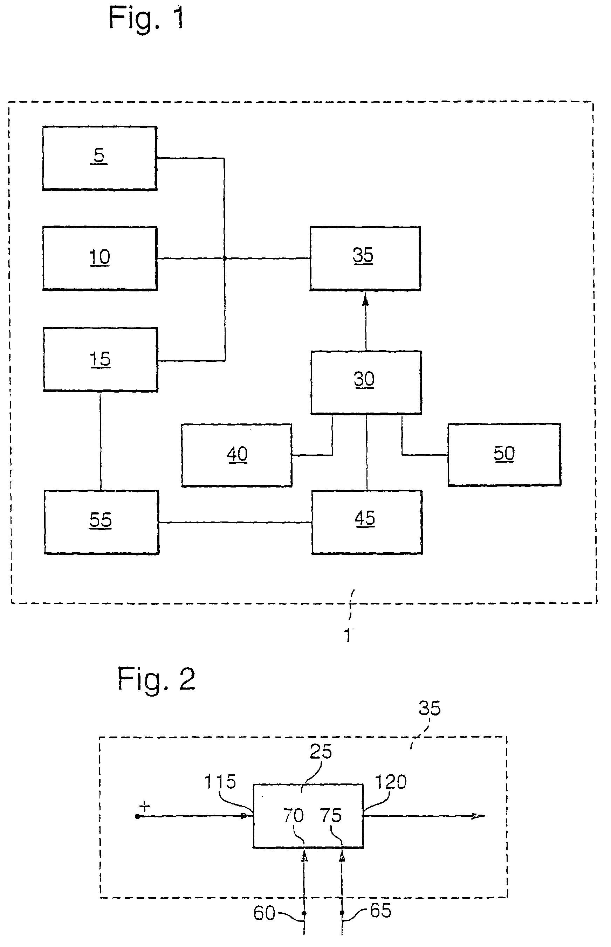

In Figur 1 kennzeichnet 1 eine als Compact-Disc-Spieler ausgebildetes elektrisches Gerät, also ein Abspielgerät für optische Speicherplatten, insbesondere Compact-Discs oder CD-ROMs. Der Compact-Disc-Spieler 1 umfaßt einen Antriebsmotor 10 zum rotatorischen Antrieb einer zwischen zwei Platten eingespannten Compact-Disc. Der Compact-Disc-Spieler 1 umfaßt weiterhin unter dem Bezugszeichen 15 zusammengefaßte Motoren und Stellglieder, die eine Abtasteinheit 55 radial über die Compact-Disc bewegen und den Einfluß von Erschütterungen auf die Positionierung der Abtasteinheit 55 mittels Regelkreisen in einem Regelbereich kompensieren. Weiterhin kann auch ein Lademotor 5 im Compact-Disc-Spieler 1 vorgesehen sein, der den Einzug und/oder Ausschub einer Compact-Disc in ein Laufwerk bzw. aus dem Laufwerk des Compact-Disc-Spielers 1 ermöglicht. Eine Spannungsversorgungseinheit 35 des Compact-Disc-Spielers 1 versorgt den Lademotor 5 zum Einzug bzw. Ausschub einer optischen Speicherplatte, den Antriebsmotor 10 zum rotatorischen Antrieb einer optischen Speicherplatte und die Mittel 15 zur Positionierung der Abtasteinheit 55 mit genau einer Versorgungsspannung, so daß dem Lademotor 5, dem Antriebsmotor 10 und den Mitteln 15 zur Positionierung der Abtasteinheit 55 jeweils die gleiche Versorgungsspannung von der Spannungsversorgungseinheit 35 zugeführt ist. Die Spannungsversorgungseinheit 35 wird von einer Auswerteschaltung 30 angesteuert, die mit einer Eingabeeinheit 40, einem Fehlerdetektor 45 und einer Compact-Disc-Sensorik 50 in einem Eingabeschacht für eine optische Speicherplatte verbunden ist. Der Fehlerdetektor 45 ist zudem mit der Abtasteinheit 55 verbunden.

Mittels der Eingabeeinheit 40 kann der Benutzer den Compact-Disc-Spieler 1 in einen Abspielmodus zum Abspielen einer in den Compact-Disc-Spieler 1 eingelegten Compact-Disc versetzen. Er kann jedoch über die Eingabeeinheit 40 auch einen gerade vorliegenden Abspielmodus beenden und einen Ausschub einer im Laufwerk des Compact-Disc-Spielers 1 befindlichen Compact-Disc veranlassen. Über die Sensorik 50 ist eine in den Eingabeschacht eingeführte Compact-Disc erkennbar, wodurch ein weiterer Einzug in das Laufwerk des Compact-Disc-Spielers 1 mittels des Lademotors 5 veranlaßt wird. Die Sensorik 50 kann auch beim Ausschub einer Compact-Disc aus dem Laufwerk des Compact-Disc-Spielers 1 eine Beendigung des Ausschubvorgangs nach Erreichen einer vorgegebenen Ausschubposition detektieren, um ein Abschalten des Lademotors 5 zur Beendigung des Ausschubvorgangs zu veranlassen. Dem Fehlerdetektor 45 ist ein bei der Abtastung einer Compact-Disc durch die Abtasteinheit 55 ermitteltes Fokus- und/oder Spurfehlersignal zugeführt. In Abhängigkeit der Amplitude des entsprechenden Fokus- und/oder Spurfehlersignals veranlaßt der Fehlerdetektor 45 über die Auswerteschaltung 30 ein Anheben der Versorgungsspannung. Dies ermöglicht ein anschließendes Anheben der Regelkreisverstärkung für die Mittel 15 zur Positionierung der Abtasteinheit 55, um möglichen Vibrationen als Ursache für erhöhte Amplituden des Fokusund/oder Spurfehlersignals entgegenzuwirken.

Die Auswerteschaltung 30 enthält beispielsweise einen Laufwerksprozessor, der die Spannungsversorgungseinheit 35 zur Einstellung einer Versorgungsspannung in Abhängigkeit des gerade höchsten Spannungsbedarfs des Lademotors 5, des Antriebsmotors 10 und der Mittel 15 zur Positionierung der Abtasteinheit 55 ansteuert.

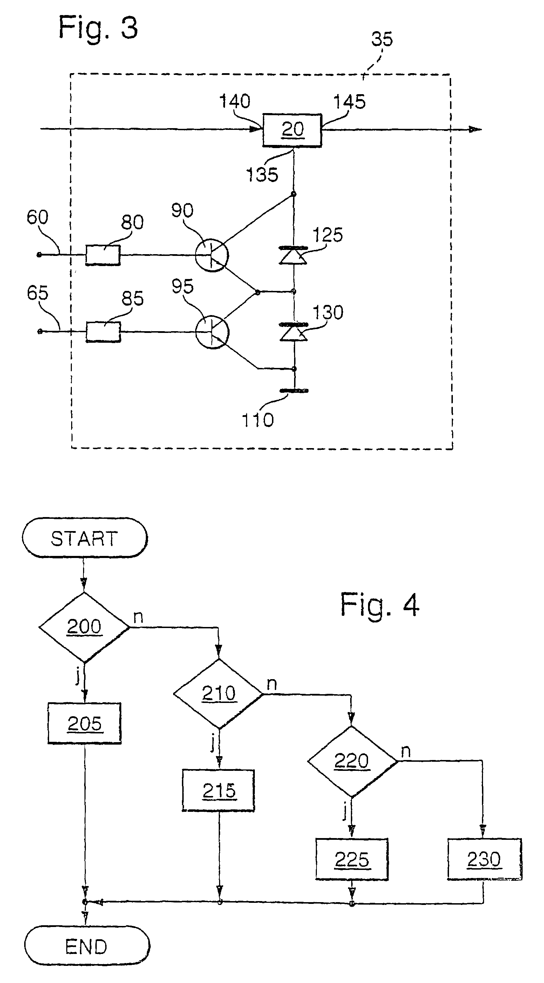

In Figur 2 ist eine durch die Auswerteschaltung 30 angesteuerte Spannungsversorgungseinheit 35 dargestellt, wobei der Laufwerksprozessor der Auswerteschaltung 30 nicht dargestellt ist, sondern nur ein erster Steuerausgang 60 und ein zweiter Steuerausgang 65 des Laufwerkprozessors. Der erste Steuerausgang 60 ist an einen ersten digitalen Steuereingang 70 eines Schaltnetzteils 25 der Spannungsversorgungseinheit 35 angeschlossen. Der zweite Steuerausgang 65 ist an einen zweiten digitalen Steuereingang 75 des Schaltnetzteils 25 angeschlossen. Dem Schaltnetzteil 25 wird außerdem eine Versorgungsspannung (+) über einen dritten Eingang 115 zugeführt. An einem Ausgang 120 des Schaltnetzteils 25 liegt dann die gewünschte Versorgungsspannung für den Lademotor 5, den Antriebsmotor 10 und die Mittel 15 zur Positionierung der Abtasteinheit 55 an. Mittels den beiden Eingangssignalen an den Steuereingängen 70, 75 des Schaltnetzteils 25 lassen sich somit vier verschiedene Spannungen aus der Versorgungsspannung (+) für die Spannungsversorgung des Lademotors 5, des Antriebsmotors 10 und der Mittel 15 zur Positionierung der Abtasteinheit 55 am Schaltnetzteil 25 einstellen, bzw. zwischen vier verschiedenen, von der Versorgungsspannung (+) abgeleiteten Spannungen umschalten. Sollte für den Lademotor 5, den Antriebsmotor 10 und die Mittel 15 zur Positionierung der Abtasteinheit 55 jeweils eine unterschiedliche Spannungsversorgung erforderlich sein, so läßt sich bei geeigneter Wahl der Versorgungsspannung (+) und der vier möglichen Schaltzustände des Schaltnetzteils 25 die jeweils erforderliche Spannungsversorgung sicherstellen.

Gemäß Figur 3 ist eine alternative durch die Auswerteschaltung 30 angesteuerte Spannungsversorgungseinheit 35 angegeben. Dabei ist der erste Steuerausgang 60 des in Figur 3 ebenfalls nicht dargestellten Laufwerksprozessors der Auswerteschaltung 30 über einen ersten Basisvorwiderstand 80 mit der Basis eines ersten npn-Bipolartransistors 90 verbunden, dessen Kollektor mit einem Fußpunkt 135 eines Längsreglers 20 verbunden ist und dessen Emitter mit dem Kollektor eines zweiten npn-Bipolartransistors 95 verbunden ist. Der zweite Steuerausgang 65 ist dabei über einen zweiten Basisvorwiderstand 85 mit der Basis des zweiten npn-Bipolartransistors 95 verbunden, dessen Emitter mit einem Bezugspotential 110 verbunden ist. An den Kollektor des ersten npn-Bipolartransistors 90 ist die Kathode einer ersten Zenerdiode 125 angeschlossen, deren Anode mit dem Emitter des ersten npn-Bipolartransistors 90 verbunden ist. An den Emitter des ersten npn-Bipolartransistors 90 ist die Kathode einer zweiten Zenerdiode 130 angeschlossen, deren Anode mit dem Bezugspotential 110 verbunden ist. Eine Eingangsspannung ist einem Eingang 140 des Längsreglers 20 zugeführt. Zwischen einem Ausgang 145 des Längsreglers 20 und dem Fußpunkt 135 liegt eine unabhängig von der Eingangsspannung durch einen Regelkreis eingestellte Festspannung von beispielsweise 7 Volt an. Über den ersten Steuerausgang 60 und den zweiten Steuerausgang 65 lassen sich der erste npn-Bipolartransistor 90 bzw. der zweite npn-Bipolartransistor 95 durchschalten oder sperren. Auf diese Weise lassen sich zwischen dem Ausgang 145 des Längsreglers 20 und dem Bezugspotential 110 je nach Zuschaltung der Zenerdioden 125, 130 vier verschiedene Spannungswerte einstellen und dem Lademotor 5, dem Antriebsmotor 10 und den Mitteln 15 zur Positionierung der Abtasteinheit 55 zuführen.

In Figur 4 ist ein Ablaufplan zur Beschreibung der Funktionsweise der Auswerteschaltung 30 für die Ansteuerung der Spannungsversorgungseinheit 35 dargestellt. Bei einem Programmpunkt 200 prüft die Auswerteschaltung 30, ob die Sensorik 50 einen Einschub einer Compact-Disc in das Laufwerk des Compact-Disc-Spielers 1 detektiert hat. Ist dies der Fall, so wird zu Programmpunkt 205 verzweigt, andernfalls wird zu Programmpunkt 210 verzweigt. Bei Programmpunkt 205 werden an die beiden Steuerausgänge 60, 65 Steuersignale angelegt, die bei der Spannungsversorgungseinheit 35 einen Umschaltvorgang auf die erforderliche Versorgungsspannung für den Lademotor 5 bewirken, falls die erforderliche Spannung an der Spannungsversorgungseinheit 35 nicht bereits eingestellt ist. Anschließend wird das Programm verlassen. Bei Programmpunkt 210 wird geprüft, ob die vom Fehlerdektektor 45 detektierte Amplitude des Fokus- und/oder Spurfehlersignals einen vorgegebenen Wert überschreitet. Ist dies der Fall, so wird zu Programmpunkt 215 verzweigt, andernfalls wird zu Programmpunkt 220 verzweigt. Bei Programmpunkt 215 werden den beiden Steuerausgängen 60, 65 Steuersignale zugeführt, die einen Umschaltvorgang der Spannungsversorgungseinheit 35 auf die für die Mittel 15 zur Positionierung der Abtasteinheit 55 erforderliche Versorgungsspannung zur Wirkung gegen Vibrationen bewirken, falls diese Spannung nicht bereits von der Spannungsversorgungseinheit 35 eingestellt ist. Anschließend wird das Programm verlassen. Bei Programmpunkt 220 wird geprüft, ob an der Eingabeeinheit 40 ein normaler Abspielmodus für das Abspielen einer in das Laufwerk des Compact-Disc-Spielers 1 eingelegten Compact-Disc angefordert wurde. Ist dies der Fall, so wird zu Programmpunkt 225 verzweigt, andernfalls wird zu Programmpunkt 230 verzweigt. Bei Programmpunkt 225 werden den beiden Steuersignalausgängen 60, 65 Steuersignale zugeführt, die in der Spannungsversorgungseinheit 35 einen Umschaltvorgang zur Versorgung des Antriebsmotors 10 mit der für den Abspielmodus erforderlichen Spannung bewirken, falls diese Spannung nicht bereits an der Spannungsversorgungseinheit 35 eingestellt wurde. Anschließend wird das Programm verlassen. Bei Programmpunkt 230 werden den beiden Steuersignalausgängen 60, 65 Steuersignale zugeführt, die die Spannungsversorgungseinheit 35 veranlassen, keine Versorgungsspannung abzugeben, da auch keine Spannungsversorgung angefordert wurde. Anschließend wird das Programm verlassen.

Am Beispiel der Spannungsversorgungseinheit 35 nach Figur 3 werden im folgenden die entsprechenden Umschaltvorgänge zur Erzeugung der erforderlichen Spannungsversorgung beschrieben. Dabei sei angenommen, daß für den Betrieb des Lademotors 5 die maximale Spannung und für den Betrieb des Antriebsmotors 10 die niedrigste Spannung erforderlich ist. Für den Fall, daß der Lademotor 5 betrieben werden soll, werden beide npn-Bipolartransistoren 90, 95 gesperrt, so daß zwischen dem Ausgang 145 des Längsreglers 20 und dem Bezugspotential 110 die maximale Spannung abgreifbar ist. Dieser Spannungswert darf für den Betrieb des Lademotors 5 nicht unterschritten werden. Für den Betrieb der Mittel 15 zur Positionierung der Abtasteinheit 55 wird eine der beiden Zenerdioden 125, 130 durch den entsprechend parallel geschalteten npn-Bipolartransistor 90, 95 überbrückt und somit zwischen dem Ausgang 145 des Längsreglers 20 und dem Bezugspotential 110 ein Spannungswert zur Verfügung gestellt, der für den Betrieb der Mittel 15 zur Positionierung der Abtasteinheit 55 nicht unterschritten werden darf. Für den Betrieb des Antriebsmotors 10 werden beide Zenerdioden 125, 130 durch die parallel geschalteten npn-Bipolartransistoren 90, 95 überbrückt, so daß die für den Betrieb des Antriebsmotors 10 erforderliche Spannung zwischen dem Ausgang 145 des Längsreglers 20 und dem Bezugspotential 110 nicht unterschritten wird und der Festspannung des Längsreglers 20 entspricht.

Wird der Ablaufplan gemäß Figur 4 ständig erneut durchlaufen, so wird die Spannungsversorgung automatisch an den gerade höchsten Spannungsbedarf angepaßt, so daß Verlustleistung eingespart werden kann. Sobald die Sensorik 50 das Ende eines Einzugs- bzw. Ausschubvorgangs einer Compact-Disc detektiert hat, wird die Spannungsversorgung auf den nächstniedrigen erforderlichen Spannungswert umgeschaltet. Wird der gerade höchste Spannungsbedarf durch die Mittel 15 zur Positionierung der Abtasteinheit 55 aufgrund des Einflusses von Vibrationen bedingt, so erfolgt ein Umschalten der Spannungsversorgung auf den nächstniedrigen im beschriebenen Beispiel für den Betrieb des Antriebsmotors 10 erforderlichen Spannungswert, sobald der Fehlerdetektor 45 eine Amplitude des Fokus- und/oder Spurfehlersignals unterhalb des vorgegebenen Wertes detektiert.

Wird der gerade höchste Spannungsbedarf durch den Antriebsmotor 10 bedingt, so erfolgt nach Beendigung des Abspielvorgangs beispielsweise nach Ablauf der Gesamtspielzeit der Compact-Disc oder durch einen Eingabebefehl an der Eingabeeinheit 40 im beschriebenen Beispiel ein Ausschalten der Spannungsversorgung.

Die beschriebene Erfindung ist auch auf alle anderen elektrischen Geräte mit Mittel unterschiedlichen Versorgungsspannungsbedarfs anwendbar, beispielsweise auch für Autoradios und CD-ROM-Laufwerke.

## Patentansprüche

1. Elektrisches Gerät (1) mit verschiedenen Mitteln (10, 15) unterschiedlichen Versorgungsspannungsbedarfs, **dadurch gekennzeichnet, dass** den Mitteln (10, 15) jeweils die gleiche Versorgungsspannung zugeführt ist, dass der Spannungswert der Versorgungsspannung umschaltbar ist und dass der Spannungswert der Versorgungsspannung in Abhängigkeit des gerade höchsten Spannungsbedarfs der Mittel (10, 15) eingestellt ist.

2. Elektrisches Gerät (1) nach Anspruch 1, **dadurch gekennzeichnet, daß** das elektrische Gerät (1) als Abspielgerät für optische Speicherplatten ausgebildet ist und Mittel (10, 15) zum Antrieb einer in das Abspielgerät (1) eingelegten optischen Speicherplatte und zur Positionierung einer Abtasteinheit (55) umfaßt.

3. Elektrisches Gerät (1) nach Anspruch 2, **dadurch gekennzeichnet, daß** ein Abspielmodus vorgesehen ist, in dem die Versorgungsspannung einen ersten vorgegebenen Wert nicht unterschreitet.

4. Elektrisches Gerät (1) nach Anspruch 2 oder 3, **dadurch gekennzeichnet, daß** ein Vibrationsmodus vorgesehen ist, in dem die Versorgungsspannung einen zweiten vorgegebenen Wert nicht unterschreitet.

5. Elektrisches Gerät (1) nach einem der vorherigen Ansprüche, **dadurch gekennzeichnet, daß** die Versorgungsspannung durch einen Längsregler (20) eingestellt ist, dessen Ausgangssignal durch mindestens einen gesteuerten Schalter (90, 95) umschaltbar ist.

6. Elektrisches Gerät (1) nach einem der vorherigen Ansprüche, **dadurch gekennzeichnet, daß** die Versorgungsspannung durch ein Schaltnetzteil (25) eingestellt ist, dessen Ausgangsspannung in Abhängigkeit mindestens eines Steuersignals umschaltbar ist.

7. Elektrisches Gerät (1) nach einem der vorherigen Ansprüche, **dadurch gekennzeichnet, daß** eine Auswerteschaltung (30) vorgesehen ist, die den höchsten gerade benötigten Spannungsbedarf der Mittel (10, 15) ermittelt und in Abhängigkeit dieses Spannungsbedarfs mindestens ein Steuersignal zur Einstellung der dafür erforderlichen Versorgungsspannung abgibt.

8. Elektrisches Gerät (1) nach einem der Ansprüche 2 bis 7, **dadurch gekennzeichnet, daß** ein Mittel (5) zum Einzug und/oder Ausschub einer optischen Speicherplatte vorgesehen ist, daß dem Mittel (5) die Versorgungsspannung zugeführt ist und daß die Versorgungsspannung in Abhängigkeit des Spannungsbedarfs dieses Mittels (5) eingestellt ist.

9. Elektrisches Gerät (1) nach Anspruch 8, **dadurch gekennzeichnet, daß** ein Einzugs-/Auszugsmodus für den Einzug bzw. den Ausschub einer optischen Speicherplatte vorgesehen ist, in dem die Versorgungsspannung einen dritten vorgegebenen Wert nicht unterschreitet.

## Claims

1. Electrical appliance (1) having various means (10, 15) with different supply voltage requirements, **characterized in that** the means (10, 15) are respectively supplied with the same supply voltage, **in that** the voltage value of the supply voltage can be changed over, and **in that** the voltage value of the supply voltage is set on the basis of the currently highest voltage requirement from the means (10, 15).

2. Electrical appliance (1) according to Claim 1, **characterized in that** the electrical appliance (1) is in the form of a playback unit for optical storage disks and comprises means (10, 15) for driving an optical storage disk placed into the playback unit (1) and for positioning a scanning unit (55).

3. Electrical appliance (1) according to Claim 2, **characterized in that** a playback mode is provided in which the supply voltage does not fall below a first prescribed value.

4. Electrical appliance (1) according to Claim 2 or 3, **characterized in that** a vibration mode is provided in which the supply voltage does not fall below a second prescribed value.

5. Electrical appliance (1) according to one of the preceding claims, **characterized in that** the supply voltage is set by a series regulator (20) whose output signal can be changed over by at least one controlled switch (90, 95).

6. Electrical appliance (1) according to one of the preceding claims, **characterized in that** the supply voltage is set by a switched-mode power supply (25) whose output voltage can be changed over on the basis of at least one control signal.

7. Electrical appliance (1) according to one of the preceding claims, **characterized in that** an evaluation circuit (30) is provided which ascertains the highest currently needed voltage requirement from the means (10, 15) and takes this voltage requirement as a basis for outputting at least one control signal for setting the supply voltage which is required therefor.

8. Electrical appliance (1) according to one of Claims 2 to 7, **characterized in that** a means (5) for taking in and/or ejecting an optical storage disk is provided, **in that** the means (5) is supplied with the supply voltage, and **in that** the supply voltage is set on the basis of the voltage requirement from this means (5).

9. Electrical appliance (1) according to Claim 8, **characterized in that** a take-in/ejection mode for taking in or ejecting an optical storage disk is provided in which the supply voltage does not fall below a third prescribed value.

## Revendications

1. Appareil électrique (1) doté de différents moyens (10, 15) ayant des besoins variés en tension d'alimentation,
**caractérisé en ce que**
la même tension d'alimentation est respectivement amenée aux moyens (10, 15), la valeur de la tension d'alimentation pouvant être commutée et la valeur de la tension d'alimentation est régulée en fonction du besoin de tension maximum des moyens (10, 15) à un moment donné.

2. Appareil électrique (1) selon la revendication 1,
**caractérisé en ce que**
l'appareil électrique (1) est conçu sous la forme d'un appareil d'audition pour des disques optiques et il comprend des moyens (10, 15) pour l'entraînement d'un disque optique placé dans l'appareil d'audition (1) et pour le positionnement d'une unité de lecture (55).

3. Appareil électrique (1) selon la revendication 2,
**caractérisé en ce qu'**
il est prévu un mode d'audition dans lequel la tension d'alimentation n'est pas inférieure à une première valeur donnée.

4. Appareil électrique (1) selon la revendication 2 ou 3,
**caractérisé en ce qu'**
il est prévu un mode de vibration dans lequel la tension d'alimentation n'est pas inférieure à une deuxième valeur donnée.

5. Appareil électrique (1) selon l'une quelconque des revendications précédentes,
**caractérisé en ce que**
la tension d'alimentation est régulée par un transformateur avec réglage en phase (20) dont le signal de sortie peut être commuté par au moins un commutateur commandé (90, 95).

6. Appareil électrique (1) selon l'une quelconque des revendications précédentes,
**caractérisé en ce que**
la tension d'alimentation est régulée par un élément de réseau combinatoire (25) dont la tension de sortie peut être commutée en fonction d'au moins un signal de commande.

7. Appareil électrique (1) selon l'une quelconque des revendications précédentes,
**caractérisé en ce qu'**
il est prévu un circuit d'évaluation (30) qui calcule le besoin maximum en tension requis à un moment donné par les moyens (10, 15) et émet, en fonction de ce besoin de tension, au moins un signal de commande pour le réglage de la tension d'alimentation requise à cet effet.

8. Appareil électrique (1) selon l'une quelconque des revendications 2 à 7,
**caractérisé en ce qu'**
un moyen (5) est prévu pour la rentrée et/ou la sortie d'un disque optique, la tension d'alimentation étant amenée au moyen (5) et la tension d'alimentation est réglée en fonction du besoin de tension de ce moyen (5).

9. Appareil électrique (1) selon la revendication 8,
**caractérisé en ce qu'**
il est prévu un mode de rentrée/sortie pour la rentrée et la sortie d'un disque optique dans lequel la tension d'alimentation n'est pas inférieure à une troisième valeur donnée.
